Europäisches Patentamt

European Patent Office

Office européen des brevets

(11) Veröffentlichungsnummer: **0 232 831 B1**

# (12) EUROPÄISCHE PATENTSCHRIFT

(45) Veröffentlichungstag der Patentschrift: **03.06.92**

(51) Int. Cl.⁵: **H02G 3/06**

(21) Anmeldenummer: **87101427.0**

(22) Anmeldetag: **03.02.87**

(54) **Kabelverschraubung.**

(30) Priorität: **11.02.86 DE 3604214**

(43) Veröffentlichungstag der Anmeldung:
**19.08.87 Patentblatt 87/34**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**EP-A- 0 165 414**
**DE-A- 3 604 213**
**DE-U- 8 603 582**
**DE-U- 8 603 583**
**GB-A- 2 091 369**

(73) Patentinhaber: **Holzmann, Hermann**
**Salzäckerstrasse 59**
**W-7000 Stuttgart 80(DE)**

(72) Erfinder: **Holzmann, Hermann**
**Salzäckerstrasse 59**
**W-7000 Stuttgart 80(DE)**

(74) Vertreter: **Otte, Peter, Dipl.-Ing.**
**Tiroler Strasse 15**
**W-7250 Leonberg(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Stand der Technik

Die Erfindung betrifft eine Kabelverschraubung, also eine Verschraubung aus Kunststoff zur Ein- und Durchführung, Abdichtung und Zugentlastung von Kabeln, Leitungen oder Schläuchen nach der Gattung des Hauptanspruchs.

Eine solche Kabelverschraubung ist beispielsweise bekannt aus der DE-OS 17 50 095 oder der DE-AS 26 31 996. Die bekannten Kabelverschraubungen bestehen üblicherweise aus einem Zwischenstutzen, der beidseitig über Außengewinde verfügt, damit er einerseits an einer Montagefläche oder einer Gehäusetrennwand o.dgl. über sein Anschlußgewinde befestigt werden kann, und andererseits eine Überwurf- oder Hutmutter auf ihn aufgeschraubt werden kann. Ferner sind am Zwischenstutzen Klemmzungen befestigt, die ringförmig um eine konzentrische, mittlere Durchtrittsöffnung für das Kabel o.dgl. stehen und entweder einstückig koaxial am Zwischenstutzen angeformt sein können, oder auch von einem separaten Klemmzungenkäfig gelagert sind, der dann seinerseits dem Zwischenstutzen so zugeordnet ist, daß beim Aufschrauben der Überwurf- oder Hutmutter, die bei ihrer Drehung durch einen sich verjüngenden Ringbund eine Art auf die elastischen Klemmzungen wirkendes Stützlager bildet die Klemmzungen im Richtung auf das eingeführte Kabel bzw. einen zwischengelegten Dichtungskörper gepreßt werden. Auf diese Weise wird das Ganze schließlich festgeklemmt, gegen Drehung gesichert und auch abgedichtet.

In diesem Zusammenhang ist ferner bekannt, die Kabeldurchführung mit einer Verdrehsicherung für die Hutmutter auszustatten (DE-AS 26 31 996), wobei diese Verdrehsicherung zwischen der Hutmutter einerseits und dem Zwischenstutzen andererseits wirksam ist und sich durch einen ratschenartigen Eingriff zwischen den auf einem kleineren Durchmesser gepreßten und sich dabei fächerartig überlappenden Klemmzungen und einer Schrägverzahnung im Inneren der Hutmutter im Bereich des Ringbunds bemerkbar macht.

Schließlich ist eine Kabelverschraubung bekannt (DE-OS 34 18 978 bzw. DE-GM 84 15 525.6), bei der im Ring der aneinandergrenzenden Klemmzungen mindestens eine selektive Klemmzunge eine solche Ausbildung erfährt, daß diese bei Einwirken der Hutmutter auf den Ringverbund der Klemmzungen aus diesem heraus in Richtung auf das eingeführte Kabel getrieben wird, derart, daß sich zwischen dem Kabel einerseits und dem nach innen auf das Kabel gepreßten Klemmzungen andererseits eine unrunde Beziehung ergibt, wodurch sich ein wesentlich sichererer Halt für das durchgeführte Kabel und eine besonders wirkungsvolle Verdrehsicherung ergibt.

Problematisch ist aber bei allen bekannten, auf diese Art aufgebauten Kabelverschraubungen, daß, da der Zwischenstutzen einerseits und die Hutmutter andererseits, üblicherweise auch noch der Dichtungskörper von allgemeiner zylindrischer Ringform als getrennte Bauelemente hergestellt werden, diese notwendigerweise für den Versand einander zugeordnet und so miteinander verbunden werden müssen, daß, abgesehen von Problemen allgemein beim Versand und der Lagerhaltung, noch in dieser Richtung erforderliche Montageschritte vorgenommen werden müssen.

Es ist daher eine erhebliche Handarbeit vor dem Versand zu dem Zeitpunkt erforderlich, zu welchem die einzelnen Hauptteile fertig aus der Herstellungsmaschine, üblicherweise als Spritzgußteile, kommen.

Diese Handarbeit besteht darin, daß der ringförmige Dichtungskörper zwischen den Klemmzungenring eingesetzt werden muß, anschließend muß die Hutmutter mit der einen Hand und der Zwischenstutzen mit der anderen Hand erfaßt werden, die beiden Teile müssen aufeinander zubewegt und so gehalten und ausgerichtet werden, daß das Innengewinde der Hutmutter auf das Außengewinde des Zwischenstutzens mindestens einige Drehungen aufgeschraubt werden kann. Hierzu ist auch eine gewisse Ausrichtarbeit und eine Art "Zielen" der Gewinde zueinander erforderlich, da diese einmal nicht verkantet sein dürfen und zum anderen eine gewisse Vordrehbewegung durchgeführt werden muß, bevor das Gewinde vielleicht greift, weil normalerweise nicht immer erwartet werden kann, daß beispielsweise der Innengewindeanfang genau auf den Außengewindeanfang ausgerichtet ist, anders aber Gewinde nicht miteinander verschraubt werden können. Hierbei muß die axial und radial saubere Ausrichtung der beiden Teile Zwischenstutzen und Hutmutter zueinander aufrechterhalten bleiben, bis das Gewinde greift, weil sonst unter Umständen verkantet aufgeschraubt wird.

Der Erfindung liegt die Aufgabe zugrunde, in diesem Bereich hierbei sowohl die Vormontage als auch die endgültige Montage und den Einbau der Kabelverschraubung beim Benutzer erleichternde Möglichkeiten zu schaffen, die sowohl eine sichere Befestigung des Dichtungskörpers als auch eine extrem vereinfachte, sehr schnell und anstrengungsfrei, gegebenenfalls auch automatisch ablaufende, sichere Vorfixierung der Hutmutter auf dem Zwischenstutzen betreffen.

Vorteile der Erfindung

Die Erfindung löst diese Aufgabe mit den kennzeichnenden Merkmalen des Hauptanspruchs und hat den Vorteil, daß durch die Anordnung eines elastisch ausgebildeten, nach Art eines Vorgewindes wirkenden Arretiermittels ein einfaches Aufklacken oder Anrasten der Hutmutter auf dem Zwischenstutzen möglich ist, einfach indem man die Hutmutter mit im Grunde beliebiger Schrägstellung, was durchaus erlaubt ist, auf den Zwischenstutzen aufsetzt und dann beide Teile lediglich zusammendrückt, wodurch die Hutmutter unter gleichzeitiger Verriegelungswirkung und Fixierung auf den Zwischenstutzen in eine Art Vorgewindeposition mit sicherer axialer und radialer Ausrichtung rutscht und dort gegen ein Abziehen oder ein sonstiges Lösen sicher gehalten bleibt.

Von besonderem Vorteil ist hierbei, daß die Erzielung einer solchen Vorfixierungsposition mit geringsten zusätzlichem Aufwand möglich ist, da es bei einer bevorzugten Ausführungsform lediglich erforderlich ist, außen an ausgewählten Klemmzungen im Klemmzungenring vorspringende, elastisch ausweichende Haltenasen anzuordnen, und zwar in einer Höhe angrenzend an das sich nach unten anschließende Gewinde des Zwischenstutzens bzw. unmittelbar angrenzend an eine umlaufende Ringausnehmung im einstückigen Übergang zwischen den Klemmzungen und dem Zwischenstutzen. Radial stehen diese, vorzugsweise gleichmäßig um den Umfang verteilten Rastnasen etwa so weit vor, wie die Spitzen des nachfolgenden Gewindes, d.h. sie erstrecken sich etwa bis zum Kerndurchmesser des Hutmutterinnengewindes.

Wird auf einen solchen Zwischenstutzen die Hutmutter aufgedrückt, dann läßt sich die Hutmutter unter hörbaren Rastgeräuschen so weit auf den Zwischenstutzen aufdrücken, bis die beiden jeweiligen Gewinde aneinanderstehen, wobei aber die das Vorgewinde bildenden elastischen Rastnasen in etwa schon auf der Höhe des zweiten oder dritten Gewindeganges in das Innengewinde der Hutmutter eingreift. Es ist daher auch, und dies ist ein weiterer besonderer Vorzug vorliegender Erfindung, möglich, aus dieser Vorfixierungsposition der Hutmutter diese durch einfaches Weiterdrehen jetzt auf den Zwischenstutzen aufzuschrauben, denn die Rastnasen greifen als Vorgewinde schon, fixieren die Hutmutter axial und radial zum eigentlichen Gewinde des Zwischenstutzens und führen die Hutmutter auch beim anfänglichen Drehen, bis die beiden jeweiligen Gewinde dann tatsächlich greifen.

Daher kann der Benutzer aus dieser relativen Vorfixierungsposition zwischen Hutmutter und Zwischenstutzen die endgültige Montage vornehmen, indem die gesamte Verschraubung mit dem unteren Gewindeteil des Zwischenstutzens an der durchzuführenden Wand oder dem Geräteteil angeschraubt wird, das Kabel wird durchgesteckt und die vorfixierte Hutmutter wird weitergedreht, bis der gewünschte Klemmgrad erzeugt ist. Dabei hält die Hutmutter in dieser Vorfixierungsposition auch sicher den eingelegten Dichtungskörper.

Es versteht sich, daß eine Anordnung der Rastzungen auch, ebenfalls wieder vorzugsweise über den Umfang gleichmäßig verteilt, am Beginn des Hutmutterinnengewindes, nach innen gerichtet möglich ist, wodurch solche hutmuttereigenen Rastnasen beim einfachen Aufschieben der Hutmutter auf den Zwischenstutzen an dem Ringverbund der Klemmzungen, gegebenenfalls unter Zurückweichen, vorbeilaufen und dann in die nach außen konkav verlaufende, umlaufende Ringnut im Übergang zwischen dem Klemmzungenverbund und dem Zwischenstutzen eingreifen. Ist eine solche Ringnut nicht vorhanden, dann greifen diese Hutmutter-Rastnasen, da sie dem eigentlichen Hutmuttergewinde axial problemlos vorgezogen werden können, in den ersten oder zweiten Gewindegang des Außengewindes am Zwischenstutzen ein.

Vorteilhaft ist ferner, daß eine einerseits problemlose, andererseits aber sichere Fixierung des Dichtungskörpers, der ein aus einem Elastomer bestehender zylindrischer Ringkörper ist, innerhalb des Ringverbunds der Klemmzungen im Zwischenstutzen dadurch möglich ist, daß ungeachtet eventueller Herstellungstoleranzen durch an der Innenseite mindestens einiger der Klemmzungen im Ringverbund angeordnete, vorzugsweise einstükkig angeformte schmale, nach innen vorspringende Rippen eine Einengung des für den Dichtungskörper zur Verfügung stehenden Raumes erzielt wird, der den Dichtungskörper aber nicht verengt, sondern lediglich in seiner Position auch dann sichert, wenn dieser normalerweise zwischen dem Ring der Klemmzungen nur lose eingesetzt werden könnte.

Diesem Problem durch einen grundsätzlich größeren Durchmesser des Dichtungskörpers zu begegnen, ist nicht möglich, denn dann würde dieser die Klemmzungen zu weit nach außen drükken, da er innen vollflächig an dem Klemmzungen-Ringverbund anliegt. Hierdurch könnte sich eine Erschwerung des Aufdrehens und der Vorfixierung der Hutmutter ergeben. Durch die vorspringenden, schmalen Innenrippen an einigen der Klemmzungen, vorzugsweise gleichmäßig über den inneren Umfang des Klemmzungen-Ringverbundes verteilt, schneiden diese Rippen nur partiell in das erlastomere Material des Dichtungskörpers ein und verdrängen dieses an dieser Stelle, so daß bei einwandfreien Toleranzen das Einsetzen nicht behindert wird, bei zu großen Toleranzen aber durch die vorspringenden Rippen immer noch ein sicherer Halt des Dichtungskörpers erreicht wird.

Dabei ist ferner vorteilhaft, daß die Anordnung der Rastnasen zur Vorfixierung der Hutmutter einerseits sowie der nach innen vorspringenden Rippen an den Klemmzungen andererseits in einem gemeinsamen Herstellungsvorgang (Spritzgießen) des Zwischenstutzens ohne größere Werkzeugumstellung und wie es sich versteht ohne größeren Materialaufwand, erfolgen kann. Beide Merkmale dienen einer verbesserten Vormontage der Kabelverschraubung insgesamt, also einerseits einer sicheren Fixierung des Dichtungskörpers im Zwischenstutzen und andererseits einem in drastischer Weise vereinfachten Verbinden der Hutmutter mit dem Zwischenstutzen durch einfaches Aufrasten.

Durch die in den Unteransprüchen aufgeführten Maßnahmen sind vorteilhafte Weiterbildungen und Verbesserungen der im Hauptanspruch angegebenen Verschraubung möglich. Besonders vorteilhaft ist die Kombination von Rastnasen für die Hutmuttervorfixierung und/oder der Halterippen für den Dichtungskörper mit einer Klemmzungenausbildung, wie sie grundsätzlich schon in der DE-OS 34 18 978 beschrieben ist und wie sie in vorteilhafter Weise darin besteht, daß, gleichmäßig über den Umfang verteilt bei einer vorgegebenen Anzahl von Klemmzungen jeweils die Hälfte dieser Klemmzungen, beispielsweise also bei nicht als einschränkend zu verstehenden, numerischen Zahlenangaben 12 Ringzungen, 6 dieser Ringzungen beidseitig schräge Flanken aufweisen, so daß sie unter Bildung eines regelmäßigen Sechsecks beim festen Anziehen der Hutmutter von dem Ringverbund der verbleibenden Klemmzungen nach innen gedrückt werden. Die verbleibenden, im folgenden als stationär bezeichneten Ringmuttern tragen dann in vorteilhafter Weise an ihren unteren Außenflächen die Rastnasen für die Hutmutterverriegelung, wobei die Halterippen für die Dichtkörper auf jeder Art von Klemmzunge innen angeordnet sein können.

Zeichnung

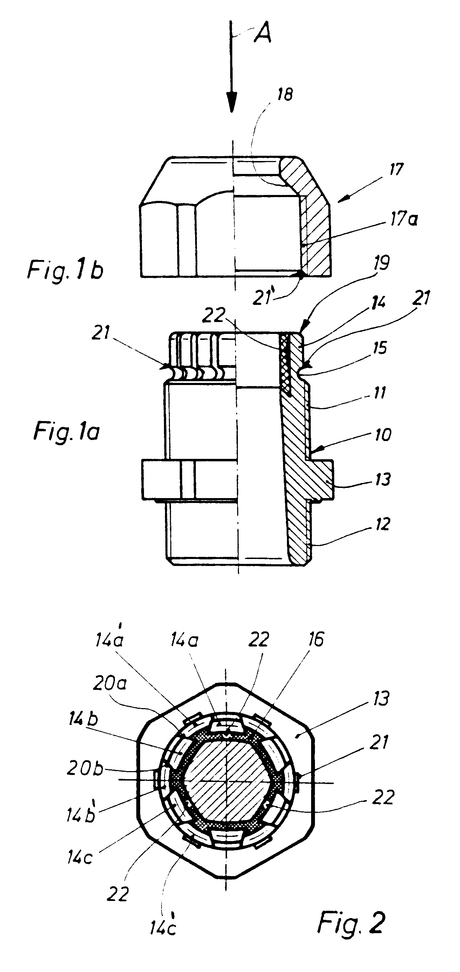

Ein Ausführungsbeispiel der Erfindung ist in der Zeichnung dargestellt und wird in der nachfolgenden Beschreibung näher erläutert. Es zeigen:
Fig. 1a und 1b
die erfindungsgemäße Kabeldurchführung, bestehend aus Zwischenstutzen und darüber angeordneter Hutmutter in Seitenansicht, jeweils hälftig im Schnitt und
Fig. 2
die Kabelverschraubung der Fig. 1a und 1b in Draufsicht, wobei das Kabel von oben so weggenommen ist, daß man die durch den Hutmutter-Preßdruck erzielte Relativverschiebung zwischen sogenann ten stationären Klemmzungen und selektiv nach innen hervortretenden Klemmzungen und ihre Einwirkung auf den eingelegten Dichtungskörper erkennen kann.

Beschreibung der Ausführungsbeispiele

Der Grundgedanke vorliegender Erfindung besteht darin, zur Montageerleichterung eine durch einfaches Drücken mögliche Rastarretierung zwischen der Hutmutter und dem Zwischenstutzen zu bewirken, die eine Art Vorgewindefixierung ist und störungsfrei in den eigentlichen Gewindeschraubvorgang überführt, wenn dieser bei der Endmontage bewerkstelligt werden soll und in weiterer vorteilhafter Ausgestaltung sicherzustellen, daß gleichzeitig auch eine präzise Zentrierung und Fixierung des Dichtkörpers in der Innenfläche der Ringbundform der Klemmzungen möglich ist.

In den Fig. 1a und 1b ist der mit seinen Klemmzungen hier vorzugsweise im einstückigen Materialübergang ausgebildete Zwischenstutzen mit 10, sein Aufnahmegewinde für die Hutmutter mit 11 und sein Außengewinde zur Befestigung an einer geeigneten Montagewand, Gehäuse-Trennwand, Durchführung o.dgl. mit 12 bezeichnet. Der Zwischenstutzen verfügt üblicherweise über einen äußeren, einen Sechskant bildenden Montagebund 13, mit welchem er dann auch auf der Montagefläche aufsitzen kann - nach oben in der Zeichenebene geht der Zwischenstutzen 10 in die durch die Betätigung der Hutmutter 17 in ihrer Position veränderbaren Klemmsegmente, Zähne oder Klemmzungen 14 über, wie sie im folgenden ausschließlich noch genannt werden. Diese Klemmzungen sind, wie erwähnt, vorzugsweise einstückig am Zwischenstutzen 10 angeformt und weisen, beispielsweise zur Erzielung einer leichteren Beweglichkeit bei hinreichender, verbleibender Festigkeit eine äußere Ringnut oder Einschneidung 15 im Übergang zwischen dem Hauptkörper des Zwischenstutzens 10 und sich selbst auf.

Nach innen ist in den Bereich und über die Höhe der Klemmzungen ein zylindrischer Dichtungskörper 16 noch eingesetzt, der während der Vormontage durch eine gewisse Klemmwirkung, auf die gleich noch eingegangen wird, gehalten und bei aufgesetzter Hutmutter für den Versand praktisch unverlierbar gesichert ist. Eine so ausgebildete Kabelverschraubung besteht lediglich aus diesen drei Elementen des Zwischenstutzens 10, dem Dichtungskörper 16 und der Hutmutter 17, die von oben auf den Zwischenstutzen aufgesetzt und dann mit diesem dadurch verschraubt wird, daß ihr Innengewinde 17a mit dem Außengewinde 11 des Zwischenstutzens 10 in Wirkverbindung tritt. Dabei verfügt die Hutmutter ferner über einen sich nach oben und innen verjüngenden Randbereich unter Bildung eines Übergang auf kleineren Öffnungsdurchmesser , wodurch sich eine als Wirkbund ausgebildete, schräg geneigte Ringfläche 18 ergibt. Durch das Zusammenwirken dieser Ringfläche 18 mit den oberen Endbereichen der Klemmzungen im Übergangsbereich 19 ergibt sich die für sich gesehen bekannte Wirkung, daß die Klemmzungen auf der so gebildeten schiefen Ebene des Stützlagers 18 bei allmählich immer stärkerem Aufschrauben der Hutmutter 17 auf das Zwischenstutzengewinde 11 auf einen immer kleineren Durchmesser und dadurch nach innen aufeinander zugedrückt werden. Da hierdurch eine nicht unerhebliche Kraftwechselwirkung zwischen Zwischenstutzen mit Klemmzungen einerseits und Hutmutter 17 andererseits bei einem Kabeleinspannen ausgewirkt wird. sind die gegenseitigen Gewinde 11 und 17a so ausgebildet, daß die Preßwirkung des Ringbundes der Hutmutter auf die Klemmzungen erst dann beginnt, wenn die Hutmutter schon mit einigen Gewindegängen auf den Gewindestutzen aufgeschraubt ist.

Im Zusammenhang mit vorliegender Erfindung ist dabei noch eine Ausführungsform realisiert, die in ihrem Grundaufbau schon der weiter vorn genannten DE-OS 34 18 978 entnommen werden kann, nämlich die Ausbildung bestimmter selektiver Klemmzungen 14a, 14b, 14c, vorzugsweise gleichmäßig über den Innenumfang des Klemmzungen-Ringverbundes verteilt, beidseitig mit nach außen, also in Richtung auf größeren Durchmesser aufeinander zugeneigt verlaufenden Flanken 20a, 20b, die dann auf entsprechend komplementären Flanken der insofern stationär verbleibenden Zwischenzungen 14a', 14b' bei hier alternierender Abwechslung durch die sich entwickelnden Preß- und Druckwirkungen selektiv nach innen vorspringend immer stärker unter unrunder Verformung des Dichtungskörpers und letztlich auch des Kabelmantels aus der am Wirkbund 18 weiter anliegenden Position der stationären Klemmzungen herausgedrückt werden. Dies hat eine Vielzahl von Vorteilen, die in der erwähnten Offenlegungsschrift genauer erläutert sind, insbesondere verbesserte Haltewirkung infolge der spezifischen Druckerhöhung, sichere Verdrehsicherung und Abdichtung.

Vorzugsweise an einer solchen Ausbildungsform des Klemmzungen-Ringverbundes, aber selbstverständlich auch auf jede beliebige Art von Kabelverschraubungen und deren Verbindung zwischen Hutmutter und Zwischenstutzen anwendbar, schlägt die Erfindung jetzt vor, zwischen der Hutmutter 17 einerseits und dem Zwischenstutzen 10 andererseits durch einfaches axiales Aufeinanderdrücken aktivierbare, dabei elastische Verrastungsmittel anzuordnen, die eine sichere Halte- und Vorfixierungswirkung auf die so am Zwischenstutzen 10 angerastete Hutmutter 17 ausüben, bevor die jeweiligen Gewinde 11 und 17a greifen. Tatsächlich wird zur Erzielung der Verrastungswirkung die Hutmutter 17 auch soweit auf den Zwischenstutzen 10 aufgedrückt, bis die beiden Gewinde aneinanderstoßen, denn eine weitere axiale Ineinanderbewegung kann dann ab diesem Zeitpunkt nur durch die relative Verdrehung der Hutmutter 17 zum Zwischenstutzen 10 bewirkt werden.

Ein erstes bevorzugtes Ausführungsbeispiel umfaßt dabei an mindestens einer Klemmzunge 14 vorzugsweise an der Stelle, wo diese einstückig in die Ringnut übergeht, eine radial nach außen vorspringende Rastnase 21 - bei einem bevorzugten Ausführungsbeispiel sind diese Rastnasen 21 an allen, beim Aufziehen der Hutmutter 17 stationär bleibenden Klemmzungen 14a', 14b', 14c' ... angeordnet. Diese Rastzungen 21 bilden eine Art elastisches, also überdrückbares Vorgewinde, mit Unterbrechungen über den Umfang verteilt und mit einer radialen Erstreckung, die in etwa dem Außendurchmesser der Gewindespitzen des Außengewindes 11 am Zwischenstutzen oder dem Außendurchmesser des Innengewindes 17a der Hutmutter 17 entspricht. An sich ist die Ausbildung der Rastnasen 21 in der Form beliebig; bevorzugt beginnen sie jedoch an ihrem Ansatz an der jeweiligen Klemmzunge verdickt und verjüngen sich nach außen vorspringend, wobei beispielsweise ein Winkel, den die beiden Flanken der Rastnase 21 zur Spitze hin einschließen, als sinnvoll erachtet werden kann, wenn dieser Winkel etwa halb so groß ist wie der Öffnungswinkel der Gewinde 11 oder 17a, Vorzugsweise sind die Rastnasen angrenzend zur und oberhalb der Ringnut 15 angesetzt. Die Funktion der Rastnasen zur Vorfixierung ist erkennbar; wird die Hutmutter 17 in Richtung des Pfeils A auf den Zwischenstutzen 11 gedrückt, wobei nicht darauf geachtet zu werden braucht, ob die Hutmutter genau horizontal und ohne sonstige Versetzungen geführt wird - es sind tatsächlich im Grunde beliebige Schrägwinkel möglich - dann ergibt sich eine erste lockere zentrierende Fixierung durch das Eingleiten der Klemmzungen 14 in die Hutmutteröffnung, bis der erste Gewindegang des Innengewindes 17a auf die Rastzähne oder Rastnasen 21 stößt. Man kann dann weiterdrücken, wodurch zunächst durch die ringförmige Anlage eine eventuell schräge Hutmutter 17 geradegerückt wird und die Rastnasen 21 biegen sich dabei etwas nach unten durch, wodurch sie dem nach innen vorspringenden Gewinde ausweichen und rasten dann jeweils in den nächsten Gang mit hörbarem Klacken ein; dies setzt sich so lange fort, bis der erste Gewindegang des Innengewindes 17a der Hutmutter auf dem ersten Gewindegang des Außengewindes 11 des Zwischenstutzens 10 aufsitzt - in dieser Position haben die Rastnasen 21 etwa die Höhe des dritten Gewindeganges erreicht, obwohl diese numerischen Zahlen ohne Bedeutung sind und auch ein Verrasten mit dem ersten Gewindegang schon eine völlig ausreichende Haltesicherung der Hutmutter 17 bietet.

Auf diese Weise ist die Hutmutter 17 vollkommen sicher, zentriert und problemlos auf dem Zwischenstutzen 10 vorfixiert, wobei ein Lösen durch die dann erforderliche Zugwirkung wesentlich schwieriger ist (man kann, auch manuell, die Hutmutter wesentlich leichter nach unten auf den Zwischenstutzen drücken). Eventuell kann man hier auch durch eine entsprechende Konfiguration der Rastnasen 21 ein Ausweichen nach unten ermöglichen, ein Abziehen erschweren.

Eine solche Vorfixierung der Hutmutter auf den Zwischenstutzen 10 eignet sich besonders auch zur vollautomatischen Montage der beiden Elemente, da es unter Berücksichtigung des Stands der Technik bei automatischen Verpackungsmaschinen u.dgl. ohne weiteres möglich ist, die Zwischenstutzen 10 mit Dichtring etwa auf einer ersten Führungsbahn aus der Spritzgußmaschine kommend mit den Klemmzungen nach oben ausgerichtet fortschreiten zu lassen, während auf einer zweiten Führungsbahn die Hutmuttern 17 durchlaufen. An einer vorgegebenen Stelle erfolgt die Ausrichtung, die Hutmutter 17 wird freigegeben und ein Stempel drückt diese mit der erforderlichen Kraft auf den Zwischenstutzen 10, wobei, wie erwähnt, leichte Versetzungen und Schräglagen problemlos aufgefangen werden, da immer so weit nach unten gedrückt werden kann, bis die jeweiligen Gewinde mit ihren ersten Gängen aufeinanderliegen.

An der eigentlichen Montagestelle kann dann eine solchermassen vorfixierte Kabelverschraubung ohne Lösen der Hutmutter in die Montageöffnung eingeschoben und mit dem Gewinde 12 fixiert, das Kabel durchgezogen und dann aus der Vorfixierungsposition lediglich durch Drehbewegung die Hutmutter 17 weiter aufgeschraubt werden, bis die gewünschte Klemm-, Dicht- und Verdrehwirkung auf das Kabel erzielt ist. Es sind dann an der Montagestelle die üblichen Hutmutter-Ausricht- und -Ansetzarbeiten, evt. noch gegen ein schräg drückendes Kabel, entbehrlich. Alternativ ist es eine weitere Ausführungsform vorliegender Erfindung, anstelle der Rastnasen 21 an den unteren Außenflächen der Klemmzungen 14 nach innen vorspringende Rastnasen 21' axial noch vor dem Beginn des Innengewindes 17a der Hutmutter 18, in diesem Falle nach innen gerichtet, anzubringen; man erkennt, daß auch in diesem Falle ein ähnliches Aufschieben und eine Vorfixierungswirkung dadurch ausgeübt wird, daß diese Rastnase 21' dann in die Ringnut 15 am Zwischenstutzen 10 einrastet. Eine stärkere Änderung des Baumusters ermöglicht natürlich auch ein Einrasten der Rastnasen 21' in die ersten Gewindegänge des Außengewindes 11 des Stutzens 10 dann, wenn man das Innengewinde 17a in der Hutmutter 17 später beginnen läßt - es ergibt sich dann eine lediglich Umkehrung der Rastzungenpositionierung.

Besonders vorteilhaft ist ferner, daß zur sicheren Fixierung des eine zylindrische Ringform aufweisenden elastomeren Dichtungskörpers 16 an den inneren Flächen mindestens einer, vorzugsweise aber einer ausgewählten, gleichmäßig im Umfangs verteilten Anzahl von Klemmzungen rippenförmige Vorsprünge 22 angeordnet sind, deren Höhe der Höhe der Klemmzungen entsprechen kann und deren nach innen gerichtete Tiefe bei insgesamt flacherer Form maßstäblich etwa so ausgebildet sein kann, wie die der Rastnasen 21. Diese Rippen 22 stellen daher selektiv auf einen nur kleinen Raum, verglichen mit der Innenfläche jeder Klemmzunge, befindliche Erhöhungen dar, die einen eingesetzten Dichtungsringkörper auch dann sicher halten und vorfixieren, wenn dieser in seinem Durchmesser so gehalten ist, daß er die Klemmzungen im durch die Hutmutter 17 nicht aktivierten Zustand kaum oder gar nicht berührt. Diese Rippen 22 sorgen daher dafür, daß im Ruhezustand der Dichtungskörper sicher gehalten ist und, beispielsweise bei abgenommener Hutmutter 17 auch durch ein durchzuziehendes Kabel nicht so leicht aus seiner Position herausgedrückt wird, während andererseits bei einem Anziehen der Hutmutter 17 der Dichtungskörper auch gegen Drehbewegungen absolut gesichert und eingespannt wird. Die Rippen 22 pressen sich dann in das elastomere Material des Dichtungskörpers 16 an den Stellen, wo sie sich befinden, üben aber sonst keine stärkere Eingrabwirkung auf das durchgeführte Kabel aus.

Es ist möglich, diese Rippen 22 nach oben und unten über der Höhe jeder Klemmzunge 14 gesehen, an denen sie einstückig angeformt sind, sich allmählich abflachend verlaufen zu lassen, so daß die rippenartigen Vorsprünge, die mit einem spitzen oder auch flacheren Winkel auf den Dichtungskörper gerichtet sind, sich im wesentlichen auf mittlerer Höhe der Klemmzungen 14 befinden und nach beiden Seiten abfallen.

**Patentansprüche**

1. Verschraubung aus Kunststoff zur Ein- und Durchführung, Abdichtung und Zugentlastung von Kabeln, Leitungen oder Schläuchen (Kabelverschraubung), bestehend aus Zwischenstutzen (10) mit Dichtungskörper (16) und Hutmutten (17), wobei am hohlzylindrischen Zwischenstutzen (10) Klemmzungen (14) koaxial angeordnet sind, welche bei Drehung der Hutmutter (17) den Dichtungskörper (16) gegen das eingeführte Kabel o.dgl. pressen, dadurch gekennzeichnet, daß eine Vorfixierung zwischen Hutmutter (17) und Zwischenstutzen (10) durch lediglich Aufeinanderdrücken ermöglichende elastische Verriegelungsmittel vorgesehen sind, bestehend aus Rastnasen (21, 21') einerseits und diese aufnehmende Ausnehmungen (Innengewinde 17a der Hutmutter 17; Ringnut 15 des Zwischenstutzens 10) andererseits an Hutmutter (17) und Zwischenstutzen (10), die so angeordnet sind, daß beide Teile (Hutmutter 17 und Zwischenstutzen 10) in einen sie gegeneinander fixierenden Halteeingriff gelangen, bevor die jeweiligen, der Verschraubung dienenden Gewinde (17a, 11) greifen.

2. Verschraubung nach Anspruch 1, dadurch gekennzeichnet, daß zur Vorfixierung des eingelegten Dichtungskörpers (16) an der Innenfläche mindestens einer der im Klemmzungen-Ringverbund stehenden Klemmzungen (14) eine sich in axialer Richtung zum Zwischenstutzen (10) erstreckende, nach innen vorspringende Rippe (22) angeordnet ist.

3. Verschraubung nach Anspruch 1 oder 2, dadurch gekennzeichnet, daß die Segmentierung angrenzend aneinanderstehender Klemmzungen (14) so getroffen ist, daß mindestens eine, vorzugsweise jeweils für alternierend sich abwechselnde Klemmzungen innerhalb des Klemmzungen-Ringverbundes beidseitig eine Schräge-Ebene-Konfiguration gebildet ist, die bei einwirkendem Hutmutterdruck diese mindestens eine Klemmzunge (14a, 14b, 14c) aus dem Ringverbund der restlichen stationären Klemmzungen (14a', 14b', 14c') heraus und in Richtung auf den Dichtkörper (16) sowie das eingeführte Kabel drückt.

4. Verschraubung nach einem der Ansprüche 1 bis 3, dadurch gekennzeichnet, daß bei insgesamt zwölf, den Ringverbund der Klemmzungen bildenden Klemmzungen jeweils sechs der Klemmzungen stationär und sechs durch den Hutmutterdruck selektiv nach innen bewegbar sind, wobei die der Verriegelung der Hutmutter (17) mit dem Zwischenstutzen (10) dienenden Rastnasen (21) außen an den stationären Klemmzungen (14a', 14b', 14c') angeordnet sind.

5. Verschraubung nach Anspruch 4, dadurch gekennzeichnet, daß die Rastnasen unten an der Klemmzunge angrenzend an die den Übergang zwischen dieser und dem Zwischenstutzen (10) bildenden Ringausnehmung (15) angeordnet sind und spitz nach außen zulaufend und sich verjüngend bis in die Tiefe des Außendurchmessers des Innengewindes (17a) der Hutmutter (17) vorspringen.

6. Verschraubung nach Anspruch 4 oder 5, dadurch gekennzeichnet, daß die Rastnasen (21) elastisch nachgiebig, aber einstückig an den Klemmzungen (14a', 14b', 14c') angeordnet sind, mit einer Breite, die zwischen 1/3 und 2/3 der jeweiligen Klemmzungenbreite liegt, derart, daß bei gleichmäßiger Verteilung der Rastnasen (21) über den Umfang alternierend ein einem elastischen Druck ausweichendes Vorgewinde gebildet ist, welches arretierend bei auf Anschlag liegendem Innengewinde (17a) und Außengewinde (11) von Hutmutter (17) und Zwischenstutzen (10) in die Gewindegänge des Innengewindes (17a) der Hutmutter (17) eingreift.

7. Verschraubung nach einem der Ansprüche 1 bis 6, dadurch gekennzeichnet, daß die Rastnasen (21') nach innen weisend und über den Umfang der Hutmutter (17) gleichmäßig verteilt an deren unteren Ende so angeordnet sind, daß bei einem Aufdrücken der Hutmutter die Rastnasen (21') entweder in die Ringnut (15) zwischen Klemmzungen (14) und dem Zwischenstutzen eingreifen, oder in erste Gewindegänge des Außengewindes (11) des Zwischenstutzens einfallen.

8. Verschraubung nach Anspruch 2, dadurch gekennzeichnet, daß die Innenrippen (22) zur Vorfixierung des Dichtungskörpers (16) gleichmäßig über den Umfang verteilt angeordnet sind und im spitzen oder flachen Winkel von ihrer einstückig mit der Klemmzunge, auf der sie sitzen, ausgebildeten Basis sich in Richtung auf den eingelegten Dichtungskörper (16) verjüngen.

9. Verschraubung nach Anspruch 8, dadurch gekennzeichnet, daß die Halterippen (22) für den Dichtungskörper mindestens nach oben in Richtung auf die Hutmutter allmählich abflachen derart, daß ein unbehindertes Einschieben des Dichtungskörpers bei allmählichen Eingraben der Rippen in dessen Außenfläche möglich ist.

**Claims**

1. Screw fitting of plastics for the insertion, guiding through, sealing and tension relief of cables, lines or hoses (cable screw fitting), comprising intermediate attachment piece (10) with sealing body (16) and cap nut (17), there being coaxially arranged on the hollow-cylindrical intermediate attachment piece (10) clamping tongues (14) which press the sealing body (16) against the insertion cable or the like when the cap nut (17) is rotated, characterized in that resilient locking means enabling pre-fixing between the cap nut (17) and the intermediate attachment piece (10), simply by pressing them onto one another, are provided and comprise latching lugs (21, 21') on the one hand and cutouts receiving them (internal thread 17a of the cap nut 17; annular groove 15 of the intermediate attachment piece 10) on the other hand on cap nut (17) and intermediate attachment piece (10) which are arranged such that both parts (cap nut 17 and intermediate attachment piece 10) come into a holding engagement mutually fixing them before the respective threads (17a, 11) serving for screwing engage.

2. Screw fitting according to Claim 1, characterized in that, for pre-fixing the laid-in sealing body (16), there is arranged on the inner face of at least one of the clamping tongues (14) in the annular connection arrangement of the clamping tongues an inwardly projecting rib (22) extending in the axial direction towards the intermediate attachment piece (10).

3. Screw fitting according to Claim 1 or 2, characterized in that the segmentation of clamping tongues (14) adjoining one another is such that at least one, preferably in each case on both sides for alternately alternating clamping tongues there is formed within the annular connection arrangement of the clamping tongues an oblique plane configuration which, during the action of the cap nut pressure, presses this at least one clamping tongue (14a, 14b, 14c) out of the annular connection arrangement of the remaining stationary clamping tongues (14a', 14b', 14c') and presses it in the direction of the sealing body (16) and of the inserted cable.

4. Screw fitting according to one of Claims 1 to 3, characterized in that, with a total of twelve clamping tongues forming the annular connection arrangement of clamping tongues, in each case six of the clamping tongues are stationary and six may be moved selectively inwards by the cap nut pressure, with the latching lugs (21) serving to lock the cap nut (17) to the intermediate attachment piece (10) being arranged on the outside on the stationary clamping tongues (14a', 14b', 14c').

5. Screw fitting according to Claim 4, characterized in that the latching lugs are arranged at the bottom on the clamping tongue adjoining the annular cutout (15) forming the transition between the latter and the intermediate attachment piece (10), and project, narrowing and tapering to a point on the outside, into the depth of the external diameter of the internal thread (17a) of the cap nut (17).

6. Screw fitting according to Claim 4 or 5, characterized in that the latching lugs (21) give resiliently but are arranged in one piece on the clamping tongues (14a', 14b', 14c'), having a width which is between 1/3 and 2/3 of the respective clamping tongue width such that, with a uniform distribution of the latching lugs (21) over the periphery, there is formed alternately a pre-thread which yields to a resilient pressure and which engages in locking manner in the thread turns of the internal thread (17a) of the cap nut (17), with an internal thread (17a) lying against a stop and an external thread (11) of the cap nut (17) and the intermediate attachment piece (10).

7. Screw fitting according to one of Claims 1 to 6, characterized in that the latching lugs (21') are arranged pointing inwards and uniformly distributed over the periphery of the cap nut (17) at the lower end thereof such that when the cap nut is pressed on the latching lugs (21') either engage in the annular groove (15) between the clamping tongues (14) and the intermediate attachment piece or enter the first thread turns of the external thread (11) of the intermediate attachment piece.

8. Screw fitting according to Claim 2, characterized in that the internal ribs (22) for pre-fixing the sealing body (16) are arranged uniformly distributed over the periphery and taper in the direction of the laid-in sealing body (16) at an acute or obtuse angle from their base which is constructed in one piece with the clamping tongue on which they are seated.

9. Screw fitting according to Claim 8, characterized in that the holding ribs (22) for the sealing body are gradually flattened off at least upwards in the direction of the cap nut such that unimpeded pushing in of the sealing body with gradual embedding of the ribs in the outer surface thereof is possible.

**Revendications**

1. Accessoire de vissage en matière synthétique pour une entrée ou un passage de câbles, conduites ou tuyaux (accessoire de vissage de câble) pour assurer l'étanchéité et le soutient en traction des câbles, accessoire composé d'un manchon intermédiaire (10) muni d'un élément d'étanchéité (16) et d'un écrou-chapeau (17), le manchon intermédiaire, cylindrique, creux, étant muni coaxialement de languettes de serrage (14), qui, lorsqu'on visse l'écrou-chapeau (17) pressent l'élément d'étanchéité (16) contre le câble ou moyen analogue, introduit dans ce manchon, caractérisé en ce qu'il est prévu un moyen de pré-assemblage entre l'écrou-chapeau (17) et le manchon intermédiaire (10) constitué par des moyens de verrouillage, élastiques, permettant uniquement un rapprochement par emmanchement, ces moyens de verrouillage se composant d'une part de becs d'accrochage (21, 21') et d'autre part des cavités de réception pour ces becs (filetage intérieur 17a de l'écrou-chapeau 17 ; rainure annulaire 15 du manchon intermédiaire 10) sur l'écrou-chapeau (17) et le manchon intermédiaire (10) prévus de manière que les deux parties (écrou-chapeau 17 et manchon intermédiaire 10) arrivent en prise de retenue et se bloquent réciproquement avant que les filetages (17a, 11) servant au vissage, viennent en prise.

2.  Accessoire de vissage selon la revendication 1, caractérisé en ce que pour le pré-assemblage de l'élément d'étanchéité (16) la surface intérieure d'au moins l'une des languettes de serrage (14) de l'ensemble annulaire de languettes de serrage, s'étend axialement en direction du manchon intermédiaire (10) et présente une nervure (22) en saillie vers l'intérieur.

3.  Accessoire de vissage selon la revendication 1 ou 2, caractérisé en ce que la segmentation des languettes de serrage (14) adjacentes est telle qu'au moins l'une, et de préférence chaque seconde languette de serrage de l'ensemble annulaire formé par les languettes de serrage, présente sur ses deux faces une forme de plans inclinés qui, sous l'effet de la pression exercée par l'écrou-chapeau expulse au moins une languette de serrage (14a, 14b, 14c) de l'ensemble annulaire, par rapport aux autres languettes de serrage, fixes, (14a', 14b', 14c') et pousse cette languette contre l'élément d'étanchéité (16) et le câble mis en place.

4.  Accessoire de vissage selon l'une des revendications 1 à 3, caractérisé en ce que pour un ensemble de douze languettes de serrage formant l'ensemble annulaire des languettes de serrage, six des languettes de serrage sont fixes et six des languettes peuvent être repoussées sélectivement vers l'intérieur, par la pression exercée par l'écrou-chapeau, les becs d'accrochage (21) servant au verrouillage de l'écrou-chapeau (17) et du manchon intermédiaire (10) étant prévus extérieurement sur les languettes de serrage fixes (14a', 14b', 14c').

5.  Accessoire de vissage selon la revendication 4, caractérisé en ce que les becs d'accrochage sont prévus en partie inférieure de la cavité annulaire (15) qui est adjacente aux languettes de serrage à la jonction de celles-ci avec le manchon intermédiaire (10) et ces becs vont en pointe vers le haut et diminuent jusque dans la gorge du diamètre extérieur du filetage intérieur (17a) de l'écrou-chapeau (17).

6.  Accessoire de vissage selon les revendications 4 ou 5, caractérisé en ce que les becs d'accrochage (21) sont souples élastiquement et font corps en une seule pièce avec les languettes de serrage (14a', 14b', 14c') et ont une largeur comprise entre 1/3-2/3 de la largeur des languettes respectives, et en ce que pour une répartition régulière des becs d'accrochage (21) à la périphérie, on a en alternance, un filetage d'amorce qui s'échappe élastiquement à la pression et qui vient prendre par blocage sur le filetage intérieur (17a) situé en butée et le filetage extérieur (11) de l'écrou-chapeau (17) et du manchon intermédiaire (10) dans les pas de vis du filetage intérieur (17a) de l'écrou-chapeau (17).

7.  Accessoire de vissage selon l'une des revendications 1 à 6, caractérisé en ce que les becs d'accrochage (21') sont tournés vers l'intérieur et sont répartis régulièrement à la périphérie de l'écrou-chapeau (17) à son extrémité inférieure, et en ce que lorsqu'on enfonce l'écrou-chapeau, les becs d'accrochage (21') viennent prendre, soit dans la rainure annulaire (15) entre les languettes de serrage (14) et le manchon intermédiaire, soit elles tombent dans les premiers pas de vis du filetage extérieur (11) du manchon intermédiaire.

8.  Accessoire de vissage selon la revendication 1, caractérisé en ce que les nervures intérieures (22) sont réparties régulièrement à la périphérie de l'élément d'étanchéité (16) pour assurer le pré-assemblage et elles vont en diminuant en pointe ou suivant un angle plat, à partir de leur languette de serrage avec laquelle elles font corps, en s'y appuyant, en direction de l'élément d'étanchéité (16) mis en place.

9.  Accessoire de vissage selon la revendication 8, caractérisé en ce que les nervures de fixation (22) de l'élément d'étanchéité sont au moins aplaties progressivement vers le haut en direction de l'écrou-chapeau, de manière à permettre d'emmancher sans difficulté l'élément d'étanchéité, avec enfoncement progressif des nervures dans la surface extérieure de cet élément d'étanchéité.

Fig. 1 b

Fig. 1 a

Fig. 2